# EUROPÄISCHE PATENTSCHRIFT

(11) **EP 2 807 729 B1**
(45) Veröffentlichungstag und Bekanntmachung des Hinweises auf die Patenterteilung: **17.02.2021**
(21) Anmeldenummer: 13707370.6
(22) Anmeldetag: 01.03.2013
(51) Int. Cl.: H02K 5/128, H02K 9/197, H02K 7/18

(54) **GEHÄUSEANORDNUNG FÜR EIN AKTIVTEIL EINER ELEKTRISCHEN MASCHINE**
HOUSING ARRANGEMENT FOR AN ACTIVE PART OF AN ELECTRIC MACHINE
ENSEMBLE CARTER POUR PARTIE ACTIVE D'UN MOTEUR ÉLECTRIQUE

(30) Priorität: 06.03.2012 DE 102012203502
(43) Veröffentlichungstag der Anmeldung: 03.12.2014
(73) Patentinhaber: Flender GmbH, 46395 Bocholt (DE)
(72) Erfinder: WINKLER, Günther, A-4785 Haibach (AT)
(74) Vertreter: Maier, Daniel Oliver
(86) Internationale Anmeldenummer: PCT/EP2013/054168
(87) Internationale Veröffentlichungsnummer: WO 2013/131820

(56) Entgegenhaltungen:
- EP-A2- 0 543 280
- DE-A1-102009 034 158
- JP-A- S5 851 756
- JP-A- S6 028 743
- JP-A- H02 193 546

## Beschreibung

Die vorliegende Erfindung betrifft eine Gehäuseanordnung für ein Aktivteil einer elektrischen Maschine. Überdies betrifft die vorliegende Erfindung eine elektrische Maschine.

Bei elektrischen Maschinen kann der Bedarf bestehen, zumindest ein Aktivteil der elektrischen Maschine gegenüber dem umgebenden Medium abzudichten. Dies ist beispielsweise der Fall, wenn elektrische Maschinen im Unterwasserbetrieb eingesetzt werden sollen. Zudem ist eine entsprechende Abdichtung erforderlich, wenn eine elektrische Maschine in der Gegenwart von explosiven Gasen eingesetzt wird. Darüber hinaus ergibt sich die Notwenigkeit der Abdichtung zumindest eines Aktivteils der elektrischen Maschine, wenn aggressive Gase aus der Umgebung das Aktivteil beschädigen können. Eine bekannte Ausführungsform einer solchen Abdichtung kann durch ein Gehäuse ermöglicht werden, welches hermetisch abgeschlossen ausgebildet ist.

Während des Betriebs der elektrischen Maschine entsteht in dem zumindest einen Aktivteil üblicherweise Wärme. Daher ist das hermetisch dichte Gehäuse üblicherweise mit einem Öl, insbesondere einem Transformatoröl, gefüllt. Durch das Öl kann die in dem Aktivteil entstehende Wärme besser an das Gehäuse der elektrischen Maschine abgeleitet werden. Zudem kann durch das Öl die Durchschlagfestigkeit und somit die Lebensdauer der elektrischen Maschine erhöht werden. Ein solches Gehäuse für eine elektrische Maschine ist üblicherweise aus zwei Gehäuseelementen aufgebaut. Dabei sollte das Gehäuseelement, das zwischen den Aktivteilen der elektrischen Maschine angeordnet ist, möglichst dünnwandig ausgebildet sein, damit die von dem ersten Aktivteil erzeugten elektromagnetischen Kräfte besonders effektiv auf das zweite Aktivteil übertragen werden können.

Bei rotatorischen elektrischen Maschinen wird üblicherweise zwischen den Aktivteilen ein sogenanntes Spaltrohr angeordnet. Ein solches Spaltrohr kann aus einem glasfaserverstärkten Kunststoff oder dergleichen gefertigt sein und kann eine Wandstärke von wenigen Millimetern aufweisen. Damit ergibt sich bei großen elektrischen Maschinen jedoch das Problem der unzureichenden Festigkeit des Spaltrohrs aufgrund des statischen Öldrucks. Im Betrieb der elektrischen Maschine dehnt sich das Öl im Innenraum des Gehäuses aufgrund der Erwärmung zusätzlich aus. Somit wird durch die thermische Ausdehnung des Öls ein zusätzlicher Druck auf das Spaltrohr ausgeübt.

Die JP S60 28743 A beschreibt eine elektrische Maschine, welche ein Gehäuse aufweist. Dabei weist das Gehäuse ein elastisches Material auf. Wenn sich Öl um den Stator durch die Erwärmung ausdehnt, kann das Öl durch eine Öffnung in dem Gehäuse geführt werden, wobei das elastische Material zusammengedrückt wird.

Zudem beschreibt die EP 0 543 280 A2 einen im Statorraum wassergekühlten und einen im Rotorraum luftgekühlten Elektromotor. Ferner können Druckwächter vorgesehen sein, um Druckschwankungen in dem unter Druck stehenden Kühlsystem zu erfassen und für Kontroll- und Regelzwecke auszuwerten.

Es ist Aufgabe der vorliegenden Erfindung, eine Gehäuseanordnung für ein Aktivteil einer elektrischen Maschine, welches mit Öl befüllt werden kann, bereitzustellen, mit der auf besonders einfache Weise ein zuverlässiger Betrieb der elektrischen Maschine ermöglicht werden kann.

Diese Aufgabe wird erfindungsgemäß durch eine Gehäuseanordnung gemäß Patentanspruch 1 und durch eine elektrische Maschine gemäß Patentanspruch 6 gelöst. Vorteilhafte Weiterbildungen der vorliegenden Erfindung sind in den Unteransprüchen angegeben.

Die erfindungsgemäße Gehäuseanordnung für ein Aktivteil einer elektrischen Maschine umfasst ein erstes und ein zweites Gehäuseelement, durch deren Verbindung ein hermetisch abgeschlossenes Gehäuse bereitgestellt ist, wobei das Aktivteil in einem Innenraum des Gehäuses anordenbar ist, und der Innenraum des Gehäuses mit einem Öl befüllbar ist und wobei die Gehäuseanordnung eine Unterdruckeinrichtung umfasst, die dazu ausgebildet ist, in den Innenraum des Gehäuses einen im Vergleich zu einem von außen auf das Gehäuse wirkenden, vorgegebenen Außendruck geringeren Innendruck zu erzeugen.

Der in dem Innenraum des Gehäuses herrschende Innendruck setzt sich aus dem Druck zusammen, der in Folge der Gewichtskraft des Öls auf das Gehäuse wirkt, und dem Druck, der entsteht, wenn sich das Öl in Betrieb der elektrischen Maschine erwärmt und dadurch ausdehnt. Die Gehäuseanordnung umfasst nun eine entsprechende Unterdruckeinrichtung, mit der im Innenraum des Gehäuses ein Unterdruck erzeugt werden kann, so dass der Innendruck im Innenraum des Gehäuses geringer ist als der Außendruck, der von außen auf das Gehäuse wirkt. Der Außendruck kann bei einer gasförmigen Umgebung dem Atmosphärendruck entsprechen. Wird die Gehäuseanordnung bzw. die elektrische Maschine unter Wasser eingesetzt, ergibt sich der Außendruck durch den Wasserdruck, der abhängig von der Tiefe im Wasser ist. Somit kann der Innendruck entsprechend an die Umgebung und die Betriebsbedingungen einer elektrischen Maschine angepasst werden. Somit besteht keine Gefahr, dass durch die Gewichtskraft des Öls und/oder die thermische Ausdehnung des Öls ein übermäßiger Druck auf eines der Gehäuseelemente der elektrischen Maschine ausgeübt wird.

Zudem weist erfindungsgemäß die Unterdruckeinrichtung einen luftgefüllten Hohlraum auf, der mit dem Innenraum des Gehäuses in Fluidverbindung steht. Die Unterdruckeinrichtung umfasst einen separaten luftgefüllten Raum bzw. Bereich, der mit dem Gehäuse verbunden ist. Dieser Hohlraum ist erfindungsgemäß durch einen entsprechenden Durchbruch mit dem Innenraum des Gehäuses fluidisch verbunden. In diesem Hohlraum kann nun ein entsprechender Unterdruck erzeugt werden, so dass der Innendruck in dem Gehäuse geringer ist als der Außendruck, der von außen auf das Gehäuse wirkt. Durch diesen luftgefüllten Hohlraum, in dem ein entsprechender Unterdruck erzeugt wird, kann der Innendruck in dem Gehäuse im Wesentlichen konstant gehalten werden. Somit kann auf einfache Weise eine Unterdruckeinrichtung für eine Gehäuseanordnung einer elektrischen Maschine bereitgestellt werden.

Ferner ist die Unterdruckeinrichtung erfindungsgemäß mit einer Pumpeneinrichtung verbindbar, die dazu ausgebildet ist, in dem luftgefüllten Hohlraum den Innendruck zu erzeugen. Durch eine entsprechende Vakuumpumpe kann in dem luftgefüllten Hohlraum ein Unterdruck erzeugt werden, so dass sich im Innenraum des Gehäuses der erwünschte Innendruck einstellt. Zu diesem Zweck umfasst die Unterdruckeinrichtung bzw. der Hohlraum erfindungsgemäss ein entsprechendes Anschlusselement, an dem eine solche Pumpeneinrichtung angeschlossen werden kann. Ebenso ist - nicht zur Erfindung gehörend - denkbar, dass die Pumpeneinrichtung fest mit der Gehäuseanordnung verbunden ist. Auf diese Weise kann der Innendruck in dem Gehäuse einfach angepasst werden.

In einer Ausführungsform ist die Unterdruckeinrichtung an einer Außenseite einer Mantelfläche des zweiten Gehäuseelements angeordnet. Wenn die Unterdruckeinrichtung außenseitig an der Gehäuseanordnung angeordnet ist, kann er nachträglich einfach an eine bestehende Gehäuseanordnung für eine elektrische Maschine angebracht werden. Zudem kann somit eine kompakte Bauform erreicht werden.

Bevorzugt ist die Unterdruckeinrichtung in einer bestimmungsgemäßen Aufstellposition der Gehäuseanordnung an einer Oberseite der Gehäuseanordnung angeordnet. Wenn die Unterdruckeinrichtung an einer Oberseite der Gehäuseanordnung angeordnet ist, wird in der Unterdruckeinrichtung ein entsprechender luftgefüllter Hohlraum bereitgestellt, der nicht mit Öl gefüllt ist. Wenn sich das Öl in Betrieb der elektrischen Maschine ausdehnt, kann das Öl in diesem Hohlraum ausweichen, der eine entsprechende Ausgleichskammer darstellt. Des Weiteren kann eine entsprechende Einlasseinrichtung, über die der Innenraum des Gehäuses mit dem Öl befüllt werden kann, an der Unterseite der Gehäuseanordnung angebracht sein. Wenn nun mit der Unterdruckeinrichtung an der Oberseite des Gehäuses ein Unterdruck erzeugt wird, kann das Öl von der Unterseite des Gehäuses eingesaugt werden. Durch das Einsaugen des Öls mittels Unterdruck wird dieses zusätzlich entwässert und erhält auf diese Weise bessere elektrische Isolationseigenschaften.

In einer weiteren Ausführungsform umfasst die Gehäuseanordnung eine Druckerfassungseinrichtung zum Erfassen des Innendrucks im Innenraum des Gehäuses. Eine solche Druckerfassungseinrichtung kann durch einen entsprechenden Drucksensor und eine entsprechende Druckanzeigeeinrichtung bereitgestellt sein. Somit kann der Innendruck in dem Gehäuse während und nach dem Befüllen des Gehäuses mit Öl überwacht werden. Hierbei kann auch eine zusätzliche Druckerfassungseinrichtung vorgesehen sein, die den Außendruck erfasst. Somit kann der Innendruck in dem Gehäuse einfach in Abhängigkeit von dem Außendruck mittels der Pumpeneinrichtung manuell eingestellt werden. Dabei ist es auch denkbar, dass der Innendruck in dem Gehäuse automatisch gesteuert bzw. geregelt wird.

Bevorzugt umfasst die Gehäuseanordnung eine Füllstandserfassungseinrichtung zum Erfassen eines Füllstands des Öls im Innenraum des Gehäuses. Eine solche Füllstandserfassungseinrichtung kann durch einen entsprechenden Füllstandssensor bereitgestellt werden. Ebenso ist es denkbar, an dem Gehäuse bzw. an der Unterdruckeinrichtung ein entsprechendes Schauglas vorzusehen, mittels welchem der Füllstand im Innenraum des Gehäuses optisch erfasst werden kann. Somit kann der Füllstand des Öls in dem Innenraum des Gehäuses während und nach dem Befüllen mit dem Öl überwacht werden.

Die erfindungsgemäße elektrische Maschine umfasst eine zuvor beschriebene Gehäuseanordnung, wobei ein erstes Aktivteil der elektrischen Maschine in den Innenraum des Gehäuses der Gehäuseanordnung angeordnet ist und der Innenraum mit dem Öl befüllt ist, und einen zweiten Aktivteil, dass zum ersten Aktivteil bewegbar angeordnet ist. Die zuvor im Zusammenhang mit der erfindungsgemäßen Gehäuseanordnung beschriebenen Vorteile und Weiterbildungen können in gleicher Weise auf die elektrische Maschine übertragen werden.

Eine solche elektrische Maschine kann beispielsweise in Unterwasserbetrieb als Generator bzw. als Meeresströmungsturbine verwendet werden. Solche Meeresströmungsgeneratoren weisen oft einen Durchmesser von mehreren Metern auf. In diesem Fall kann der Innendruck in dem Gehäuse entsprechend angepasst werden, dass auch bei solchen Dimensionen das Gehäuse durch den Innendruck, der durch die thermische Ausdehnung des Öls erzeugt wird, nicht beschädigt wird. Zudem kann der Innendruck entsprechend an die Tiefe angepasst werden, in der die elektrische Maschine unter Wasser angeordnet wird. Des Weiteren kann eine solche elektrische Maschine bei entsprechenden Förderanlagen verwendet werden, die zusätzliche Getriebe umfassen und bei denen verschiedene Ölkreisläufe vorhanden sind. Schließlich kann die elektrische Maschine auch in der Umgebung von aggressiven oder explosiven Gasen eingesetzt werden.

Bevorzugt ist das zweite Gehäuseelement der Gehäuseanordnung zumindest bereichsweise mit dem erst Aktivteil mechanisch gekoppelt. Wenn in dem Innenraum der Gehäuseanordnung ein entsprechender Innendruck eingestellt wird, der geringer ist als der Außendruck, wirkt eine mechanische Kraft auf das zweite Gehäuseelement. Dabei ist das zweite Gehäuseelement an entsprechenden Stützelementen des ersten Aktivteils der elektrischen Maschine abgestützt. Somit wird eine mechanische Verformung des zweiten Gehäuseelements auf einfach Weise verhindert.

In einer bevorzugten Ausführungsform ist ein Stator als das erste Aktivteil der elektrischen Maschine in dem Gehäuse angeordnet und das zweite Gehäuseelement ist als Spaltrohr ausgebildet. Die elektrische Maschine ist als rotatorische elektrische Maschine ausgebildet, wobei der Stator der elektrischen Maschine durch das hermetisch dichte Gehäuse gegenüber der Umgebung abgedichtet ist. Der Rotor der elektrischen Maschine kann entsprechende Permanentmagneten umfassen, die zusätzlich abgedichtet sind.

Die vorliegende Erfindung wird nun anhand der beigefügten Zeichnungen näher erläutert. Dabei zeigen:
- FIG 1: eine Perspektivdarstellung einer elektrischen Maschine in einer Gehäuseanordnung;
- FIG 2: eine elektrische Maschine gemäß FIG 1 in einer geschnittenen Perspektivdarstellung;
- FIG 3: eine Detailansicht gemäß FIG 2 ohne Rotor; und
- FIG 4: eine weitere Detailansicht gemäß FIG 2 ohne Rotor.

Die nachfolgend näher geschilderten Ausführungsbeispiele stellen bevorzugte Ausführungsformen der vorliegenden Erfindung dar.

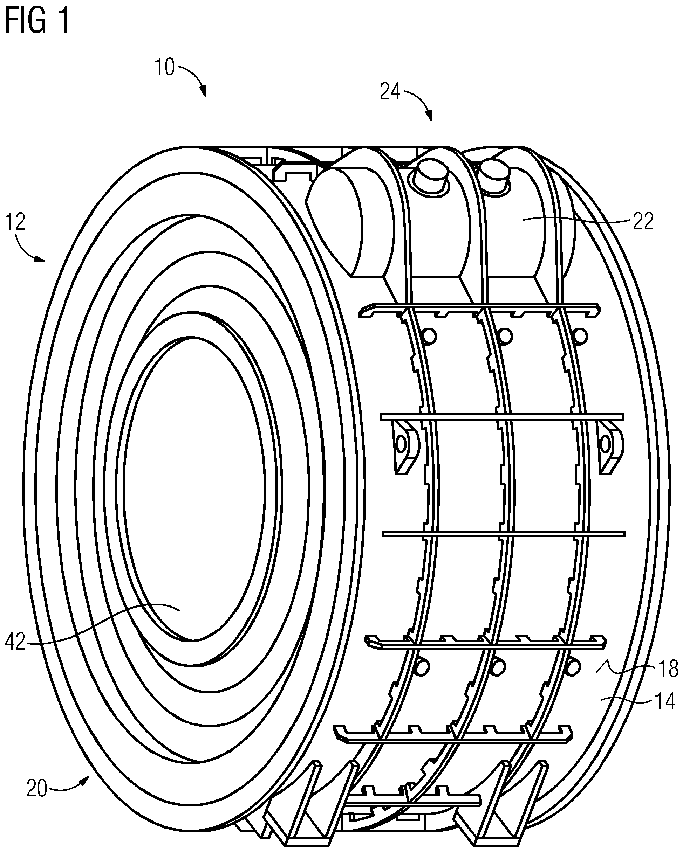

FIG 1 zeigt in einer Perspektivdarstellung eine elektrische Maschine 10, die als rotatorische elektrische Maschine ausgebildet ist. Die elektrische Maschine 10 umfasst eine Gehäuseanordnung 12 in der ein Stator als Aktivteil der elektrischen Maschine 10 angeordnet ist. Somit kann der Stator der elektrischen Maschine 10, der üblicherweise entsprechende Wicklungen umfasst, gegenüber dem die elektrische Maschine 10 umgebenden Medium abgedichtet werden. Des Weiteren umfasst die elektrische Maschine 10 einen Rotor 42. Die elektrische Maschine 10 kann für den Unterwasserbetrieb als Meeresströmungsgenerator eingesetzt werden, wobei die elektrische Maschine 10 in diesem Fall ein Durchmesser von mehreren Metern aufweisen kann.

Die Gehäuseanordnung 12 umfasst ein entsprechendes Gehäuse 20, das durch ein erstes Gehäuseelement 14 und ein zweites Gehäuseelement 16 gebildet ist. Das erste Gehäuseelement 14 umfasst eine Mantelfläche 18 und einen entsprechenden Gehäuseflansch. Das erste Gehäuseelement 14 kann aus einem Metall, insbesondere aus Stahl, gebildet sein. Das zweite Gehäuseelement 16, das in FIG 1 nicht zu erkennen ist, ist als Spaltrohr ausgebildet. Dieses Spaltrohr weist die Form eines Hohlzylinders auf, wobei die Wandstärke üblicherweise einige Millimeter beträgt. Das Spaltrohr kann beispielsweise aus einem glasfaserverstärkten Kunststoff oder einem kohlefaserverstärkten Kunststoff gebildet sein. Bei der elektrischen Maschine 10 ist das Spaltrohr in dem Luftspalt zwischen Stator und Rotor der elektrischen Maschine 10 angeordnet.

Durch den Zusammenbau bzw. durch die Verbindung des ersten Gehäuseelements 14 und des zweiten Gehäuseelements 16 wird das luftdichte Gehäuse 20 gebildet. Der Innenraum 28 des Gehäuses 20 kann mit einem Öl, insbesondere einem Trafoöl, befüllt werden. Somit wird die in Betrieb der elektrischen Maschine 10 in dem Stator erzeugte Wärme besser an das Gehäuse 20 der elektrischen Maschine 10 abgeleitet. Durch die Gewichtskraft des Öls wird im Innenraum 28 des Gehäuses 20 ein Druck erzeugt, der auf das Gehäuse 20 wirkt. Im Betrieb der elektrischen Maschine 10 erwärmt sich der Stator der elektrischen Maschine 10 und somit auch das Öl im Innenraum 28 des Gehäuses 20. In Folge der Erwärmung dehnt sich das Öl im Innenraum 28 des Gehäuses 20 aus. Der Druck durch die Gewichtskraft und die thermische Ausdehnung des Öls wirkt insbesondere auf das zweite Gehäuseelement 16 bzw. das Spaltrohr, da dieses eine geringe Wandstärke und somit eine geringe mechanische Festigkeit aufweist.

Um erfindungsgemäß eine mechanische Verformung bzw. eine Beschädigung des als Spaltrohr ausgebildeten zweiten Gehäuseelements 16 zu verhindern, weist die Gehäuseanordnung 12 eine Unterdruckeinrichtung 22 auf. Mit der Unterdruckeinrichtung 22 kann in dem Innenraum 28 des Gehäuses 20 ein Innendruck erzeugt werden, der im Vergleich zu dem Außendruck, der von außen auf das Gehäuse 20 wirkt, geringer ist. Die Unterdruckeinrichtung 22 ist bevorzugt bei einer bestimmungsgemäßen Aufstellposition der Gehäuseanordnung 12 an einer Oberseite 24 der Gehäuseanordnung 12 angebracht.

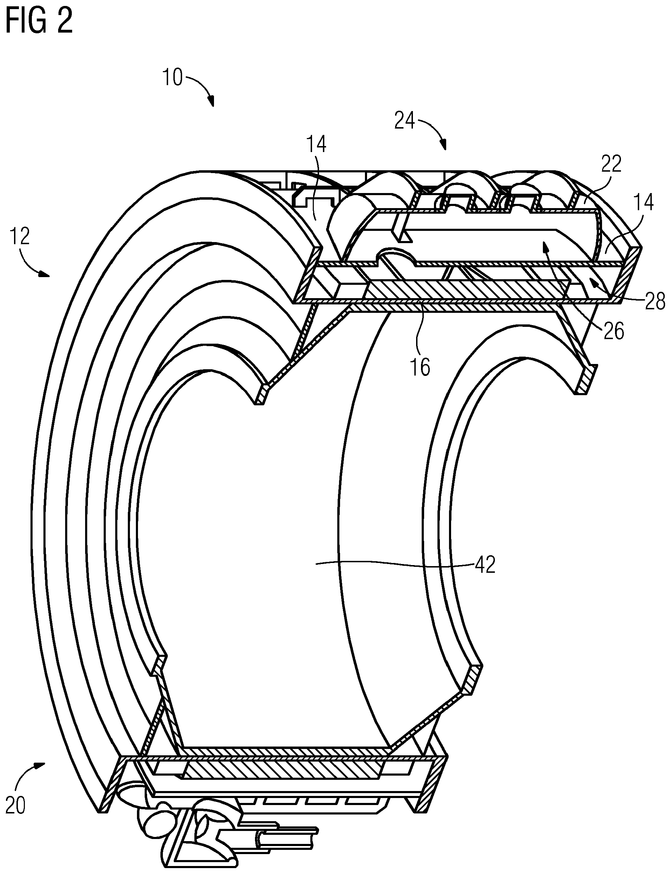

FIG 2 zeigt die Gehäuseanordnung 10 gemäß FIG 1 in einer geschnittenen Perspektivdarstellung. Dabei ist zu erkennen, dass die Unterdruckeinrichtung 22 einen luftgefüllten Hohlraum 26 aufweist. Des Weiteren ist das zweite Gehäuseelement 16 bzw. das Spaltrohr zu erkennen, das in dem Luftspalt zwischen Stator und Rotor 42 angeordnet ist.

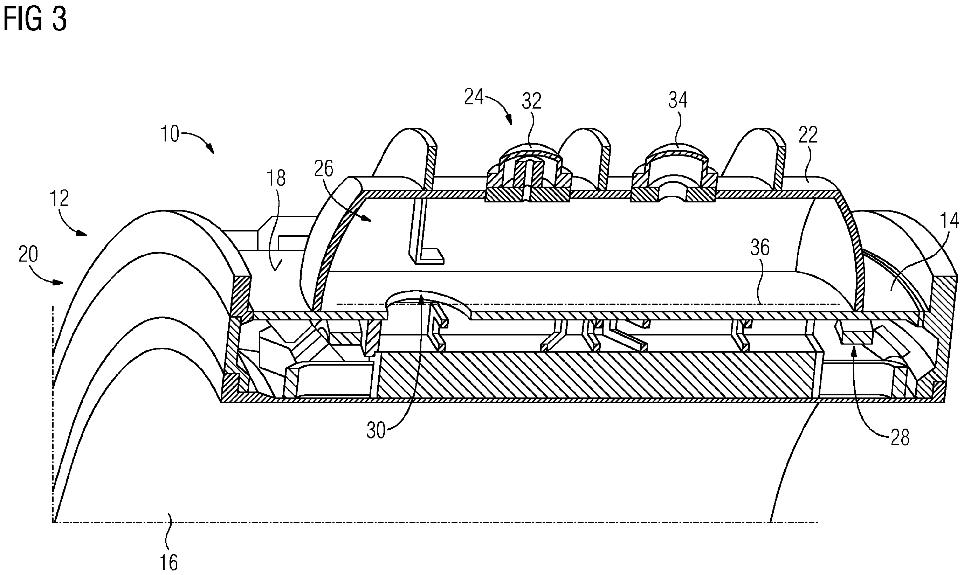

Dieser luftgefüllte Hohlraum 26 ist insbesondere in der Detailansicht gemäß FIG 3 zu erkennen, in der der Rotor 42 nicht dargestellt ist. Der luftgefüllte Hohlraum 26 ist mit dem Innenraum 28 des Gehäuses 20 fluidisch verbunden. Zu diesem Zweck weist das erste Gehäuseelement 14 erfindungsgemäß an dessen Mantelfläche 18 einen entsprechenden Durchbruch 30 auf, der in den luftgefüllten Hohlraum 26 führt. Die Unterdruckeinrichtung 22 weist erfindungsgemäß eine Anschlusseinrichtung 32 auf, die mit einer Pumpeneinrichtung verbunden werden kann. Die Anschlusseinrichtung 32 kann als Absaugventil ausgebildet sein. Somit kann mittels einer Pumpeneinrichtung in dem luftgefüllten Hohlraum 26 der Unterdruckeinrichtung 22 ein Unterdruck erzeugt werden, sodass sich im Innenraum 28 des Gehäuses 20 ein Innendruck ausbildet, der geringer ist als der Außendruck, der von außen auf das Gehäuse 20 wirkt. Wenn in dem Innenraum 28 des Gehäuses 20 ein Unterdruck erzeugt wird, wirkt eine mechanische Kraft auf das Spaltrohr 16. Zu diesem Zweck ist das Spaltrohr 16 zumindest bereichsweise an dem Stator bzw. entsprechenden Stützelementen abgestützt, so dass es sich nicht in Richtung des Innenraums 28 des Gehäuses 20 verformen kann.

Des Weiteren umfasst die Gehäuseanordnung 12 bzw. die Unterdruckeinrichtung 22 eine Füllstandserfassungseinrichtung. Diese kann durch einen entsprechenden Füllstandsensor bereitgestellt werden. In dem hier dargestellten Ausführungsbeispiel umfasst die Unterdruckeinrichtung 22 eine Füllstandserfassungseinrichtung in Form eines Schauglases 34. Über dieses Schauglas 34 kann der Füllstand in dem Innenraum 28 des Gehäuses 20 bzw. in der Unterdruckeinrichtung 22 überprüft werden. Somit kann der Füllstand des Öls während und nach dem Befüllen des Innenraums 28 des Gehäuses 20 mit dem Öl überwacht werden. Der Füllstand des Öls sollte dabei so gewählt werden, dass der Stator der elektrischen Maschine 10 vollständig mit dem Öl bedeckt ist. Das maximale Niveau des Ölfüllstands ist in FIG 3 durch die Linie 36 dargestellt. Somit bleibt in der Unterdruckeinrichtung 22 der luftgefüllte Hohlraum 26 bestehen, in dem mittels der Pumpeinrichtung über die Anschlusseinrichtung 32 ein entsprechender Unterdruck erzeugt und aufrechterhalten werden kann.

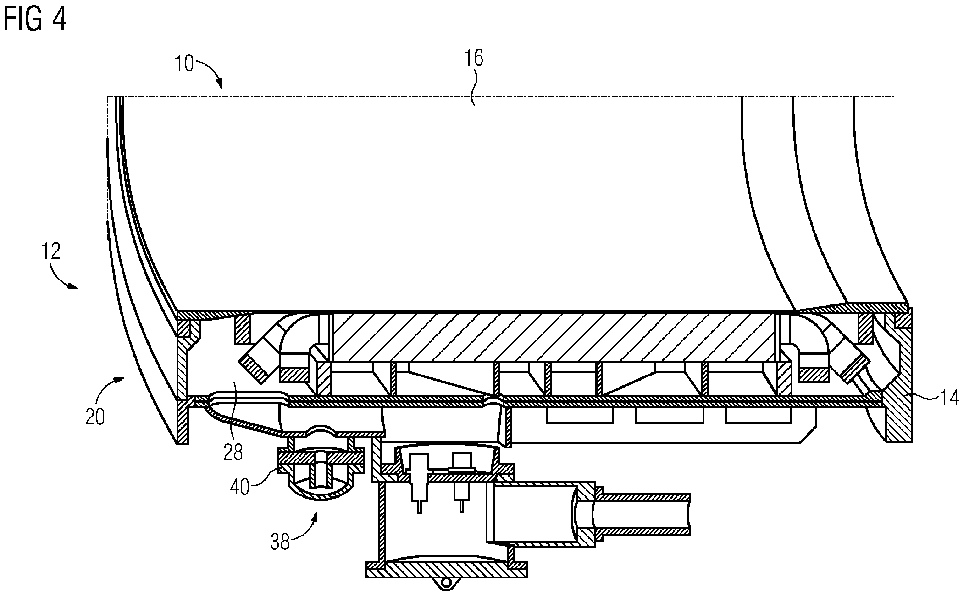

FIG 4 zeigt eine weitere Detailansicht gemäß FIG 2 ohne Rotor 42. Dabei ist ein unterer Bereich der Gehäuseanordnung 12 dargestellt. In einer bestimmungsgemäßen Aufstellposition der elektrischen Maschine 10 ist dabei an einer Unterseite 38 der Gehäuseanordnung 12 eine Einlasseinrichtung 40 angeordnet. Die Einlasseinrichtung 40 ist als entsprechendes Ventil ausgebildet, das mit einem Reservoir bzw. einem Tank verbunden werden kann, indem sich das Öl befindet. Die Einlasseinrichtung 40 ist fluidisch mit dem Innenraum 28 des Gehäuses 20 verbunden. Beim Befüllen des Innenraums 28 des Gehäuses 20 kann ein Ölreservoir mit der Einlasseinrichtung 40 verbunden werden. Im Anschluss kann dem luftgefülltem Hohlraum 26 der Unterdruckeinrichtung 22 ein entsprechender Unterdruck erzeugt werden. Somit wird das Öl über die Einlasseinrichtung 40 an der Unterseite 38 des Gehäuses 20 in den Innenraum 28 des Gehäuses 20 gezogen. Über einen Füllstandsensor bzw. über das Schauglas 34 kann der Füllstand des Öls im Innenraum 28 des Gehäuses 20 überprüft werden.

Des Weiteren kann in dem Innenraum 28 eine hier nicht dargestellte Druckerfassungseinrichtung vorgesehen sein. Ebenso kann an der Außenseite des Gehäuses 20 eine weitere Druckerfassungseinrichtung vorgesehen sein, mit der der Außendruck ermittelt wird. Somit kann der Innendruck im Innenraum 28 des Gehäuses 20 in Abhängigkeit von dem Außendruck eingestellt werden.

## Patentansprüche

1. Gehäuseanordnung (12) für ein Aktivteil einer elektrischen Maschine (10) mit einem ersten und einem zweiten Gehäuseelement (14,16), durch deren Verbindung ein hermetisch abgeschlossenes Gehäuse (20) bereitgestellt ist, wobei das zweite Gehäuseelement (16) ein Spaltrohr ist, wobei das Aktivteil in einem Innenraum (28) des Gehäuses (20) anordenbar ist, und wobei der Innenraum (28) des Gehäuses (20) mit einem Öl befüllbar ist, **dadurch gekennzeich**- **net**, dass die Gehäuseanordnung (12) eine Unterdruckeinrichtung (22) umfasst, die dazu ausgebildet ist, in dem Innenraum (28) des Gehäuses (20) einen im Vergleich zu einem von außen auf das Gehäuse (20) wirkenden, vorgegebenen Außendruck geringeren Innendruck zu erzeugen, dass die Unterdruckeinrichtung (22) einen luftgefüllten Hohlraum (26) aufweist, der mit dem Innenraum (28) des Gehäuses (20) in Fluidverbindung steht, dass zu diesem Zweck das erste Gehäuseelement (14) an dessen Mantelfläche (18) einen entsprechenden Durchbruch (30) aufweist, der in den luftgefüllten Hohlraum (26) führt und dass die Unterdruckeinrichtung (22) eine Anschlusseinrichtung (32) aufweist, die mit einer Pumpeneinrichtung verbindbar ist, wobei die Pumpeneinrichtung dazu ausgebildet ist, in dem luftgefüllten Hohlraum (26) den Innendruck zu erzeugen.

2. Gehäuseanordnung (12) nach Anspruch 1, **dadurch g ekennzeichnet**, dass die Unterdruckeinrichtung (22) an einer Außenseite einer Mantelfläche (18) des zweiten Gehäuseelements (14) angeordnet ist.

3. Gehäuseanordnung (12) nach einem der vorhergehenden Ansprüche, **dadurch gekennzeichnet, dass** die Unterdruckeinrichtung (22) in einer bestimmungsgemäßen Aufstellposition der Gehäuseanordnung (12) an einer Oberseite (24) der Gehäuseanordnung (10) angeordnet ist.

4. Gehäuseanordnung (12) nach einem der vorhergehenden Ansprüche, **dadurch gekennzeichnet, dass** die Gehäuseanordnung (12) eine Druckerfassungseinrichtung zum Erfassen des Innendrucks im Innenraum (28) des Gehäuses (20) umfasst.

5. Gehäuseanordnung (12) nach einem der vorhergehenden Ansprüche, **dadurch gekennzeichnet, dass** die Gehäuseanordnung (12) eine Füllstandserfassungseinrichtung zum Erfassen eines Füllstands des Öls im Innenraum (28) des Gehäuses (20) umfasst.

6. Elektrische Maschine (10) mit
- einer Gehäuseanordnung (12) nach einem der vorhergehenden Ansprüche, wobei ein erstes Aktivteil der elektrischen Maschine in dem Innenraum (28) des Gehäuses (20) der Gehäuseanordnung (12) angeordnet ist, und der Innenraum (28) mit einem Öl befüllt ist, und
- einem zweiten Aktivteil, das zum ersten Aktivteil bewegbar angeordnet ist.

7. Elektrische Maschine (10) nach Anspruch 6, **dadurch gekennzeichnet, dass** das zweite Gehäuseelement (16) der Gehäuseanordnung (12) zumindest bereichsweise mit dem ersten Aktivteil mechanisch gekoppelt ist.

8. Elektrische Maschine (10) nach Anspruch 6 oder 7, **da durch gekennzeichnet**, dass ein Stator als das erste Aktivteil der elektrischen Maschine (10) in dem Gehäuse (20) angeordnet ist.

## Claims

1. Housing arrangement (12) for an active part of an electric machine (10) with a first and a second housing element (14, 16), by means of the connection of which a hermetically sealed housing (20) is provided, wherein the second housing element (16) is a motor can, wherein the active part can be arranged in an interior space (28) of the housing (20), and wherein the interior space (28) of the housing (20) can be filled with an oil, **characterised in that** the housing arrangement (12) comprises a vacuum facility (22) which is embodied to generate a lower inner pressure, compared with a predetermined outer pressure which acts externally on the housing (20), in the interior space (28) of the housing (20) so that the vacuum facility (22) has an air-filled cavity (26), which is connected fluidically with the interior space (28) of the housing (20) so that for this purpose the first housing element (14) has a corresponding opening (30) on its lateral area (18), which leads into the air-filled cavity (26) and that the vacuum facility (22) has a connection facility (32) which can be connected to a pump facility, wherein the pump facility is embodied to generate the inner pressure in the air-filled cavity (26).

2. Housing arrangement (12) according to claim 1, **characterised in that** the vacuum facility (22) is arranged on an exterior side of a lateral area (18) of the second housing element (14).

3. Housing arrangement (12) according to one of the preceding claims, **characterised in that** in a normal setup position of the housing arrangement (12) the vacuum facility (22) is arranged on a top side (24) of the housing arrangement (10) .

4. Housing arrangement (12) according to one of the preceding claims, **characterised in that** the housing arrangement (12) comprises a pressure detection facility for detecting the inner pressure in the interior space (28) of the housing (20).

5. Housing arrangement (12) according to one of the preceding claims, **characterised in that** the housing arrangement (12) comprises a fill level detection facility for detecting a fill level of the oil in the interior space (28) of the housing (20).

6. Electric machine (10) with
- a housing arrangement (12) according to one of the preceding claims, wherein a first active part of the electric machine is arranged in the interior space (28) of the housing (20) of the housing arrangement (12), and the interior space (28) is filled with an oil, and
- a second active part, which is arranged movably with respect to the first active part.

7. Electric machine (10) according to claim 6, **characterised in that** the second housing element (16) of the housing arrangement (12) is coupled mechanically at least in sections to the first active part.

8. Electric machine (10) according to claim 6 or 7, **characterised in that** a stator, as the first active part of the electric machine (10), is arranged in the housing (20).

## Revendications

1. Agencement (12) de carcasse d'une partie active d'une machine (10) électrique, comprenant un premier et un deuxième éléments (14, 16) de carcasse, dont la liaison donne une carcasse (20) fermée de manière hermétique, le deuxième élément (16) de carcasse étant une gaine, la partie active pouvant être mise dans un espace (28) intérieur de la carcasse (20) et l'espace (28) intérieur de la carcasse (20) pouvant être empli d'huile, **caractérisé en ce que** l'agencement (12) de carcasse comprend un dispositif (22) de mise en dépression, qui est constitué pour produire, dans l'espace (28) intérieur de la carcasse (20), une pression intérieure plus basse qu'une pression extérieure donnée à l'avance, agissant de l'extérieur sur la carcasse (20), **en ce que** le dispositif (22) de mise en dépression a une cavité (26) remplie d'air, qui est en liaison fluidique avec l'espace (28) intérieur de la carcasse (20), **en ce qu'**à cette fin, le premier élément (14) de la carcasse a, sur sa surface (18) latérale, une traversée (30) correspondante, qui conduit à la cavité (26) remplie d'air et **en ce que** le dispositif (22) de mise en dépression a un dispositif de raccord, qui peut être relié à un dispositif de pompage, le dispositif de pompage étant constitué pour produire la pression intérieure dans la cavité (26) remplie d'air.

2. Agencement (12) de carcasse suivant la revendication 1, **caractérisé en ce que** le dispositif (22) de mise en dépression est disposé sur une face extérieure d'une surface (18) latérale du deuxième élément (14) de la carcasse.

3. Agencement (12) de carcasse suivant l'une des revendications précédentes, **caractérisé en ce que** le dispositif (22) de mise en dépression est, dans une position de montage conforme aux prescriptions de l'agencement (12) de carcasse, disposé sur un côté (24) supérieur de l'agencement (10) de carcasse.

4. Agencement (12) de carcasse suivant l'une des revendications précédentes, **caractérisé en ce que** l'agencement (12) de carcasse comprend un dispositif de détection de la pression, pour détecter la pression dans l'espace (28) intérieur de la carcasse (20).

5. Agencement (12) de carcasse suivant l'une des revendications précédentes, **caractérisé en ce que** l'agencement (12) de carcasse comprend un dispositif de détection de niveau pour la détection d'un niveau de l'huile dans l'espace (28) intérieur de la carcasse (20).

6. Machine (10) électrique, comprenant
- un agencement (12) de carcasse suivant l'une des revendications précédentes, une première partie active de la machine électrique étant disposée dans l'espace (28) intérieur de la carcasse (20) de l'agencement (12) de carcasse, et l'espace (28) intérieur étant empli d'huile, et
- une deuxième partie active, qui est montée mobile par rapport à la première partie active.

7. Machine (10) électrique suivant la revendication 6, **caractérisée en ce que** le deuxième élément (16) de carcasse de l'agencement (12) de carcasse est couplé mécaniquement, au moins par endroits, à la première partie active.

8. Machine (10) électrique suivant la revendication 6 ou 7, **caractérisée en ce qu'**un stator est disposé dans la carcasse (20), comme première partie active de la machine (10) électrique.
